# EUROPEAN PATENT SPECIFICATION

(11) **EP 1 757 247 B1**
(45) Date of publication and mention of the grant of the patent: **04.08.2010**
(21) Application number: 04821978.6
(22) Date of filing: 18.05.2004
(51) Int. Cl.: A61C 15/02

(54) **DENTAL STICK**
DENTALSTAB
CURE-DENT

(43) Date of publication of application: 28.02.2007
(73) Proprietor: Izmaylov, Viktor Ivanovich, Moskovskaya obl., 143965 (RU)
(72) Inventor: Izmaylov, Viktor Ivanovich, Moskovskaya obl., 143965 (RU)
(74) Representative: Andrae, Steffen
(86) International application number: PCT/RU2004/000189
(87) International publication number: WO 2005/110270

(56) References cited:
- WO-A-96/19155
- WO-A2-96/19155
- SU-A1- 1 509 065
- US-A- 5 230 356
- US-A- 5 735 300
- US-A- 5 806 540

## Description

### Technical field

The invention relates to the field of medicine and, more specifically, it relates to the stomatology and is intended for cleaning the interdental spaces with simultaneous massage of the gingiva for the purposes of improving the hygienic condition of the oral cavity and preventing stomatological diseases.

### PRIOR ART

Known in the art are dental sticks with cleaning elements deflected from the holder axis (EP 0932371, SU 1627166), with a curved holder and pointed cleaning elements (DE 2915044). A common disadvantage of these dental sticks is the impossibility or difficulty of a simultaneous massage of the gingiva between teeth.

Also known in the art is a dental stick-activator containing a straight, unbent holder with oppositely deflected massaging and cleaning elements tapered towards the ends thereof while forming in each massaging element a cross-trapezoidal section with cleaning elements 3 at their end which are deflected from the holder plane in opposite directions (PCT/RU95/00274 published as WO 96/19155). The main disadvantage of the known dental sticks is the difficulty of massaging the gingiva, particularly their remote parts. Besides, the trapezoidal shape and a variable size of the cross-section of the massaging and cleaning elements complicate the process of producing the articles.

US-A-5 806 540 discloses a tooth pick having a hollow body with an internal rib which forms a cleaning element in a head part with a tip which is an extension of the rib and arranged rectangular to the straight, bendable body of the tooth pick. A sealing wall seals air in the hollow body.

### DISCLOSURE OF THE INVENTION

The basic object of the invention is to develop a dental stick simple in design and providing a possibility of cleaning and massaging the interdental space with simultaneous massage of the gingiva front surface.

This object is attained by a dental stick according to claim 1. Preferred embodiments of a dental stick of claim 1 are recited in subclaims 2 to 7.

The object is attained due to the fact that in a dental stick comprising a holder with massaging and cleaning elements at both ends of the holder, which are directed in opposite directions and tapering towards their ends, the holder is curved so that an inflection is formed in its middle section with two adjacent symmetrical segments which are offset on opposite sides relative to the axis of symmetry of the dental stick. The massaging elements have two flat surfaces extending perpendicular to the plane defined by the curved holder, the massaging elements pointing in a direction opposite to the offset direction of the adjacent symmetrical segment of the holder. The cleaning elements are formed at the edges of the massaging elements with extensions directed towards opposite sides relative to the plane formed by the curved holder.

Preferably the cross-sections of the symmetrical segments of the holder are circular and decrease so that said segments taper in the direction from the center of the holder towards the massaging elements.

Preferably the massaging elements have a surface opposite to the direction of the extension of the corresponding cleaning element, said surface being wave-shaped.

Preferably the symmetrical segments of the holder are made arc-shaped, coupled to each other and have their convex portions directed in opposite directions, or they are made rectilinear coupled to each other through a curved portion.

Preferably the rectilinear portions of the holder are parallel to its axis of symmetry.

Preferably the extensions of the cleaning elements are rounded.

The technical result from the use of the invention is obtained due to the fact that making the massaging and cleaning elements with two flat surfaces perpendicular to the holder axis plane considerably simplifies the manufacturing process, and making the holder as a bent article following the jaw shape provides removal of the remnants of food even between the permanent teeth with simultaneous massage of the gingiva.

The presence of a wave-shaped surface on each massaging element enables one to perform pulsating pressure on the soft tissues of the gingival papilla, thereby causing an excessive blood supply to these areas and, therefore, to increase the massaging efficiency as a whole.

### BRIEF DESCRIPTION OF THE DRAWINGS

The invention is illustrated by drawings, in which:

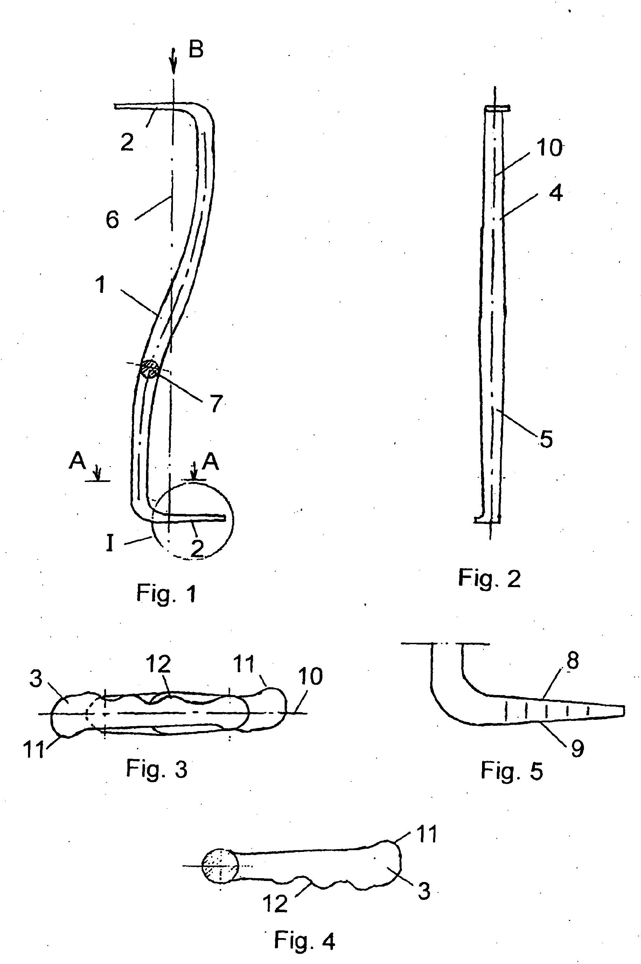

Figs. 1, 2 are two projections of the dental sticks;
Fig. 3 is a view along the arrow B in Fig. 1;
Fig.4 is a cross-sectional view along the line A-A in Fig. 1;
Fig. 5 is an enlarged view of the massaging element (fragment I in Fig. 1).

### ONE EMBODIMENT OF THE INVENTION

The dental stick comprises a holder 1 with a massaging element 2 and cleaning element 3. The holder 1 is bent with an inflection in the middle section to form two symmetrical segments 4 and 5 which are offset on opposite sides relative to the axis of symmetry 6 of the dental stick. The symmetrical segments of the holder 1 are arc-shaped symmetrical segments coupled to each other, and their convex portions are directed in opposite directions. The cross-sections 7 of the symmetrical segments of the holder 1 are made circular and decrease so that said segments taper in the direction from the middle of the holder towards the massaging elements.

The massaging and cleaning elements 2, 3 are tapered in the direction towards the ends of the cleaning elements and have two flat surfaces 8 and 9 perpendicular to the holder axis plane 10. The massaging elements 2 are deflected in the directions opposite to the offset portions of the symmetrical segments 4 and 5 of the holders relative to the axis of symmetry 6. The cleaning elements 3 have arc-shaped extensions 11 which are directed to opposite sides relative to the axis plane of the holder 10. The surfaces 12 of the massaging elements opposite to the direction of the extension 11 of an appropriate cleaning element are wave-shaped.

The dental stick may be made of stainless steel or high-strength plastic. All joining parts of the dental stick should be rounded to reduce its internal stress and to exclude a possibility of damage of the paradontium tissue.

The dental stick is used as follows. One of the symmetrical segments of the holder with the massaging element is clipped by three fingers of the right hand. If in this case the other massaging element is directed downwards, the top right or bottom left sides of the jaw is treated. In the space between the adjacent teeth the cleaning element 3 is inserted and then the massaging element 2 and a few movements are made across the jaw and up-and-down with a slight pressure on the gingiva between the teeth that allows one to remove the remnants of food and, at the same time, to perform the massage of the gingiva and gingival papilla. After that the dental stick is taken for the other end and perform the treatment of the left half of the top jaw and the right half of lower jaw.

### INDUSTRIAL APPLICABILITY

The invention can be widely used in the medical-dental practice as means of individual hygiene allowing one to reduce inflammatory processes in paradontium tissues, to stop gingiva angiostaxis, to reduce the teeth mobility, to improve a trophism of blood vessels and activity of the paradontium nervous system.

Since practically all adult population all over the world suffer from paradontosis the scope of production dental sticks is unlimited.

## Claims

1. A dental stick comprising a holder (1) with massaging and cleaning elements (2, 3) at both ends of the holder (1), which are directed in opposite directions and tapering towards their ends, wherein
the holder is curved so that an inflection is formed in its middle section with two adjacent symmetrical segments (4 and 5) which are offset on opposite sides relative to the axis of symmetry (6) of the dental stick,
the massaging elements (2) have two flat surfaces (8, 9) extending perpendicular to the plane defined by the curved holder (1), the massaging elements (2) pointing in a direction opposite to the offset direction of the adjacent symmetrical segment (4, 5) of the holder (1), and
the cleaning elements (3) are formed at the edges of the massaging elements (2) with extensions (11) directed towards opposite sides relative to the plane formed by the curved holder (1).

2. The dental stick according to claim 1, **characterized in that** the cross-sections of the symmetrical segments (4, 5) of the holder (1) are circular, the cross-sections decreasing so that said segments taper in the direction from the center of the holder (1) towards the massaging elements (2).

3. The dental stick according to claim 1 or 2, **characterized in that** the massaging elements (2) have a surface (12) opposite to the direction of the extension (11) of the corresponding cleaning element (3), said surface (12) being wave-shaped.

4. The dental stick according to claim 1 or 2 or 3, **characterized in that** the symmetrical segments (4, 5) of the holder (1) are made arc-shaped, coupled to each other and have their convex portions directed in opposite directions.

5. The dental stick according to claim 1 or 2 or 3, **characterized in that** the symmetrical segments (4, 5) of the holder (1) are made rectilinear and coupled to each other by a curved portion.

6. The dental stick according to claim 5, **characterized in that** the rectilinear portions of the holder (1) are parallel to its axis of symmetry (6).

7. The dental stick according to any of claims 1 to 6, **characterized in that** the extensions (11) of the cleaning elements (3) are rounded.

## Patentansprüche

1. Zahnstocher mit einem Halteteil (1) mit Massier- und Reinigungselementen (2, 3) an beiden Enden des Halteteils (1), die in entgegengesetzte Richtungen weisen und zu ihren Enden hin dünner werden, wobei
das Halteteil gekrümmt ist, so dass in seinem Mittelabschnitt ein Wendepunkt mit zwei angrenzenden symmetrischen Segmenten (4 und 5) gebildet wird, die nach entgegen gesetzten Seiten, bezogen auf die Symmetrieachse (6) des Zahnstochers, versetzt sind,
die Massierelemente (2) zwei flache Oberflächen (8, 9) aufweisen, die sich senkrecht zu der Ebene erstrecken, die durch das gekrümmte Halteteil (1) definiert wird, wobei die Massierelemente (2) in eine Richtung entgegengesetzt zu der Versetzungsrichtung des angrenzenden symmetrischen Segments (4, 5) des Halteteils (1) weisen, und
die Reinigungselemente (3) an den Kanten der Massierelemente (2) mit Vorsprüngen (11) ausgebildet sind, die sich nach entgegen gesetzten Seiten relativ zu der Ebene, die von dem gekrümmten Halteteil definiert wird, erstrecken.

2. Zahnstocher nach Anspruch 1, **dadurch gekennzeichnet, dass** die Querschnitte der symmetrischen Segmente (4, 5) des Halteteils (1) kreisförmig sind, wobei die Querschnitte abnehmen, so dass die Segmente in Richtung vom Zentrum des Halteteils (1) zu den Massierelementen (2) dünner werden.

3. Zahnstocher nach Anspruch 1 oder 2, **dadurch gekennzeichnet, dass** die Massierelemente (2) eine Oberfläche (12) aufweisen, die der Richtung der Vorsprünge (11) des entsprechenden Reinigungselements (3) gegenüber liegt, wobei diese Oberfläche (12) wellenförmig ist.

4. Zahnstocher nach Anspruch 1 oder 2 oder 3, **dadurch gekennzeichnet, dass** die symmetrischen Segmente (4, 5) des Halteteils (1) bogenförmig ausgeführt sind, miteinander verbunden sind und dass ihre konvexen Abschnitte in entgegengesetzte Richtungen weisen.

5. Zahnstocher nach Anspruch 1 oder 2 oder 3, **dadurch gekennzeichnet, dass** die symmetrischen Segmente (4, 5) des Halteteils (1) geradlinig ausgeführt und miteinander über einen gekrümmten Abschnitt verbunden sind.

6. Zahnstocher nach Anspruch 5, **dadurch gekennzeichnet, dass** die geradlinigen Abschnitte des Halteteils (1) parallel zu dessen Symmetrieachse (6) verlaufen.

7. Zahnstocher nach irgendeinem der Ansprüche 1 bis 6, **dadurch gekennzeichnet, dass** die Vorsprünge (11) der Reinigungselemente (3) abgerundet sind.

## Revendications

1. Cure-dents comprenant un support (1) avec des éléments de massage et de nettoyage (2, 3) aux deux extrémités du support (1), qui sont dirigés dans des directions opposées et qui sont effilés vers leurs extrémités, dans lequel
le support est incurvé de sorte qu'une inflexion est formée dans sa section médiane avec deux segments symétriques adjacents (4 et 5) qui sont décalés sur des côtés opposés par rapport à l'axe de symétrie (6) du cure-dent,
les éléments de massage (2) comportent deux surfaces planes (8, 9) qui s'étendent perpendiculairement au plan défini par le support incurvé (1), les éléments de massage (2) étant pointés dans une direction opposée à la direction de décalage du segment symétrique adjacent (4, 5) du support (1), et
les éléments de nettoyage (3) sont formés au niveau des bordures des éléments de massage (2) avec des extensions (11) dirigées vers des côtés opposés par rapport au plan formé par le support incurvé (1).

2. Cure-dents selon la revendication 1, **caractérisé en ce que** les sections transversales des segments symétriques (4, 5) du support (1) sont circulaires, les sections transversales diminuant de sorte que lesdits segments sont effilés dans la direction depuis le centre de support (1) vers les éléments de massage (2).

3. Cure-dents selon la revendication 1 ou 2, **caractérisé en ce que** les éléments de massage (2) ont une surface (12) opposée à la direction de l'extension (11) de l'élément de nettoyage correspondant (3), ladite surface (12) étant de forme ondulée.

4. Cure-dents selon la revendication 1 ou 2 ou 3, **caractérisé en ce que** les segments symétriques (4, 5) du support (1) sont réalisés en forme d'arc, couplés l'un à l'autre, et sont tels que leurs portions convexes sont dirigées dans des directions opposées.

5. Cure-dents selon la revendication 1 ou 2 ou 3, **caractérisé en ce que** les segments symétriques (4, 5) du support (1) sont réalisés rectilignes et couplés l'un à l'autre par une portion incurvée.

6. Cure-dents selon la revendication 5, **caractérisé en ce que** les portions rectilignes du support (1) sont parallèles à son axe de symétrie (6).

7. Cure-dents selon l'une quelconque des revendications 1 à 6, **caractérisé en ce que** les extensions (11) des éléments de nettoyage (3) sont arrondies.
